# EUROPÄISCHE PATENTSCHRIFT

(11) **EP 2 114 291 B1**
(45) Veröffentlichungstag und Bekanntmachung des Hinweises auf die Patenterteilung: **20.04.2011**
(21) Anmeldenummer: 08734579.9
(22) Anmeldetag: 30.01.2008
(51) Int. Cl.: A61C 13/00, B23Q 1/54, B23Q 35/10

(54) **TRÄGERPLATTE FÜR EINE KOPIERFRÄSEINRICHTUNG**
SUPPORT PLATE FOR A DUPLICATING MILLING APPARATUS
PLAQUE DE SUPPORT POUR UN DISPOSITIF DE FRAISAGE PAR COPIAGE

(30) Priorität: 02.02.2007 AT 1802007
(43) Veröffentlichungstag der Anmeldung: 11.11.2009
(73) Patentinhaber: STEGER, Heinrich, 39031 Bruneck (IT)
(72) Erfinder: STEGER, Heinrich, 39031 Bruneck (IT)
(74) Vertreter: Hofinger, Stephan
(86) Internationale Anmeldenummer: PCT/EP2008/000697
(87) Internationale Veröffentlichungsnummer: WO 2008/092646

(56) Entgegenhaltungen:
- EP-A- 0 402 720
- WO-A-96/05782
- DE-A1-102006 027 395
- DE-U1-202006 015 334

## Beschreibung

Die Erfindung betrifft eine Trägerplatte mit den Merkmalen des Oberbegriffs des Anspruchs 1 und eine Kopierfräseinrichtung mit einer solchen Trägerplatte.

Derartige Kopierfräseinrichtungen werden vor allem zur Herstellung von Werkstücken mit komplizierter Raumform verwendet. In der Zahntechnik kommen solche Kopierfräseinrichtungen insbesondere zur Herstellung von Inlays, Onlays und Kronen zum Einsatz. Dabei wird mittels einer Tastvorrichtung ein Modellkörper mechanisch abgetastet, wobei die Auslenkungen des Tasterstiftes synchron auf ein motorisch angetriebenes Bearbeitungswerk übertragen werden und das Bearbeitungswerkzeug in einer spanenden Bearbeitung, z.B. durch Fräsen oder Schleifen, einen dem Modellkörper Identischen Formkörper aus einem Formrohling herausarbeitet.

Beim österreichischen Gebrauchmuster AT 8676 U1 sind der Modellkörper und/oder der Formrohling um eine vertikale Achse drehbar mittels scheibenförmiger Halteelemente in der Trägerplatte angeordnet, wobei die Trägerplatte um eine im Wesentlichen horizontale Achse drehbar an der Kopierfräseinrichtung gelagert ist.

Als nachteilig bei bekannten Kopierfräseinrichtungen hat es sich herausgestellt, dass das Halteelement mit dem Modellkörper während eines kompletten Fräsvorganges mehrmals aus der Trägerplatte entfernt und in einer neuen Position wieder eingespannt werden muss, um eine Bearbeitung des Modellkörpers von unterschiedlichen Seiten zu ermöglichen.

Ausgehend von diesem Stand der Technik hat es sich die Erfindung zur Aufgabe gemacht, eine Trägerplatte mit den Merkmalen des Oberbegriffes des Anspruches 1 dahingehend weiterzubilden, dass eine Bearbeitung des Modelkörpers von unterschiedlichen Seiten ermöglicht wird, ohne dass das Halteelement aus der Trägerplatte entfernt und wieder neu eingespannt werden muss.

Erfindungsgemäß wird diese Aufgabe durch eine Trägerplatte mit den Merkmalen des Anspruchs 1 gelöst.

Durch die schwenkbare Anordnung der Halteelemente in der Trägerplatte ermöglicht es die Erfindung, die Lageposition der Halteelemente relativ zur Trägerplatte zu verändern, ohne dass ein Entfernen und ein neuerliches Einspannen der Halteelemente in der Trägerplatte notwendig ist, wie dies bisher beim Stand der Technik erforderlich war.

Sind dabei die beiden Halteelemente um eine gemeinsame horizontale Drehachse verschwenkbar in einer Durchtrittsöffnung angeordnet, übernimmt diese gemeinsame Verschwenkbarkeit der Halteelemente die Funktion der um eine horizontalen Achse schwenkbaren Trägerplatte, d.h. die Trägerplatte selbst kann drehfest an der Kopierfräseinrichtung angeordnet werden.

Im Sinne einer konstruktiv einfachen und stabilen Lösung sieht ein weiteres Ausführungsbeispiel der Erfindung vor, dass die Trägerplatte wenigstens zwei Durchtrittsöffnungen aufweist, in denen jeweils wenigstens ein Halteelement für den Formrohling oder den Modellkörper um wenigstens eine horizontale Drehachse schwenkbar anordenbar bzw. angeordnet ist.

Um gewährfeisten zu können, dass der aus dem Formrohling gefräste Formkörper mit dem Modellkörper tatsächlich ident ist, ist es wichtig, dass die relative Lage des Modellkörpers zum Formrohling während des gesamten Kopierfräsvorganges unverändert bleibt. Aus diesem Grund sieht ein weiteres Ausführungsbeispiel der Erfindung vor, dass die Halteelemente für den Formrohling und den Modellkörper synchron verschwenkbar in der wenigstens einen Durchtrittsöffnung anordenbar bzw. angeordnet sind, wodurch Ungenauigkeiten, die beim Stand der Technik durch das mehrmalige Herausnehmen und wieder Einspannen der Halteelemente in die Trägerplatte auftreten können, vermieden werden.

Die Arretierung der synchron verschwenkten Halteelemente kann dabei gemäß einem weiteren Ausführungsbeispiel durch eine Feststelleinrichtung zur lösbaren Lagepositionierung der Halteelemente in unterschiedlichen Stellungen erreicht werden.

Ein bevorzugtes Ausführungsbeispiel einer erfindungsgemäßen Trägerplatte, das insbesondere dann zur Anwendung kommen kann, wenn die Trägerplatte um eine im Wesentlichen horizontale Achse drehbar, vorzugsweise über einen Winkel von 360°, an der Kopierfräseinrichtung angeordnet ist, sieht vor, dass die Halteelemente für den Formrohling und den Modellkörper jeweils um eine horizontale Drehachse schwenkbar in der wenigstens einen Durchtrittsöffnung anordenbar bzw angeordnet sind, wobei die Drehachsen der Halteelemente parallel verlaufen. In diesem Fall schließen die parallelen horizontalen Drehachsen der Halteelemente mit der horizontalen Drehachse der Trägerplatte einen Winkel von vorzugsweise ungefähr 90° ein, sodass einerseits durch Verschwenken der Trägerplatte und andererseits durch Verschwenken der Halteelemente der Formrohling in zwei unterschiedlichen Ebenen bearbeitet werden kann, ohne dass dabei die Halteelemente aus der Trägerplatte entfernt und wieder neu eingespannt werden müssen.

Gemäß einem weiteren Ausführungsbeispiel der Erfindung, welches sich insbesondere für drehfest angeordnete Trägerplatten eignet, sind die Halteelementen für den Formrohling und den Modellkörper jeweils um zwei horizontale Drehachsen, die einen Winkel von vorzugsweise 90° einschließen, schwenkbar in der wenigstens einen Durchtrittsöffnung anordenbar bzw angeordnet.

Gemäß einer technisch einfach zu realisierenden Lösung erfolgt die schwenkbare Anordnung der Halteelemente in der/den Durchtrittsöffnung(en) mittels wenigstens einer Spannvorrichtung zum Fixieren der scheibenförmigen Halteelemente, wobei die Spannvorrichtung wenigstens um eine im Wesentlichen horizontale Drehachse an der Trägerplatte gelagert ist(sind). Anders ausgedrückt, stellt die Spannvorrichtung eine Aufnahme für das Halteelement dar, sodass die Halteelemente im Wesentlichen frei von Spannungseinwirkungen gehalten werden können.

Um eine stabile Fixierung der Halteelemente in der Trägerplatte erreichen zu können, ist gemäß einem weiteren Ausführungsbeispiel der Erfindung vorgesehen, dass die Spannvorrichtung wenigstens eine Klemmeinrichtung zum Fixieren des Haltelementes aufweist.

Als besonders günstig hat es sich dabei herausgestellt, wenn wenigstens eine Spannvorrichtung im Wesentlichen ringförmig, das Halteelement zumindest teilweise umschließend ausgebildet ist und die Fixierung des Halteelementes in der Spannvorrichtung mit wenigstens einer Klemmeinrichtung erfolgt, wodurch eine besonders einfache Fixiermöglichkeit für das Halteelement in der Trägerrichtung bei gleichzeitig stabiler Lage des Halteelementes auch während des Fräsvorganges erreicht wird.

Grundsätzlich wäre es auch möglich, das Halteelement mittels lediglich einer drehbar gelagerten Klemmbacke in der bzw. den Durchtrittsöffnung(en) der Trägerplatte anzuordnen. Versuche des Anmelders haben jedoch ergeben, dass dabei infolge der relativ instabilen Fixierung und der beim Fräsen einwirkenden Kräfte Ungenauigkeiten beim gefrästen Formkörper auftreten können.

Ungenauigkeiten können auch dann auftreten, wenn die Halteelemente nicht ausreichend fest in der Spannvorrichtung fixiert sind, weshalb gemäß einem weiteren Ausführungsbeispiel der Erfindung vorgesehen ist, dass die Klemmeinrichtung eine mittels einer Schraube feststellbare Klemmbacke aufweist.

Erfolgt die schwenkbare Anordnung der Halteelemente in der/den Durchtrittsöffnungen der Trägerplatte mittels einer Spannvorrichtung, zeichnet sich ein bevorzugtes Ausführungsbeispiel der Erfindung durch wenigstens zwei wenigstens um eine im Wesentlichen horizontale Drehachse gelagerte Spannvorrichtungen für scheibenförmige Halteelemente aus, die mechanisch und synchron bewegbar verbunden sind. Dabei hat es sich für eine einfache Handhabung bei gleichzeitig stabiler Lagerung der Halteelemente als vorteilhaft herausgestellt, wenn die beiden Spannvorrichtungen jeweils um eine horizontale Drehachse drehbar in der wenigstens eine Durchtrittsöffnung gelagert sind, wobei die Drehachsen der Spannvorrichtungen parallel verlaufen und die beiden Spannvorrichtungen über eine Hebelmechanik gekuppelt sind.

Gemäß einer besonders robusten Ausführungsvariante der Erfindung kann weiters vorgesehen sein, dass die Hebelmechanik einen ersten, um die Drehachse der ersten Spannvorrichtung drehbaren Hebel und einen zweiten, um die Drehachse der zweiten Spannvorrichtung drehbaren Hebel aufweist und die beiden vorzugsweise einarmigen Hebel mittels eine Kuppelstange vorzugsweise starr verbunden sind, wobei es sich gemäß einem weiteren Ausführungsbeispiel der Erfindung als vorteilhaft herausgestellt hat, wenn die Feststellvorrichtung zur lösbaren Lagepositionierung der Kuppelstange in unterschiedlichen Stellungen angeordnet und ausgebildet ist.

Dabei spielt es keine wesentliche Rolle, wie die Feststellvorrichtung ausgebildet ist. Erfindungswesentlich ist lediglich der Umstand, dass die Kuppelstange und damit die Halteelemente in unterschiedlichen Lagepositionen fixiert werden können. Gemäß einem Ausführungsbeispiel der Erfindung weist die Feststellvorrichtung dazu eine Feststellschraube auf, die durch eine an der Kuppelstange ausgebildete bzw. angeordnete Führungsbahn durchtritt und an der Trägerplatte angeordnet ist.

Die Erfindung betrifft weiters eine Kopierfräseinrichtung mit einer Trägerplatte der vorbeschriebenen Art.

Weitere Vorteile und Einzelheiten der Erfindung werden anhand der nachfolgenden Figurenbeschreibung unter Bezugnahme auf die in der Zeichnung dargestellten Ausführungsbeispiele näher erläutert. Dabei zeigt
- Fig. 1a-1c: schematisch Prinzipskizzen der schwenkbaren Anordnung von Halteelementen in einer erfindungsgemäßen Trägerplatte,
- Fig. 2: ein Ausführungsbeispiel der Erfindung und
- Fig. 3: in perspektivischer Ansicht eine Kopierfräseinrichtung mit einer erfindungs- gemäßen Trägerplatte.

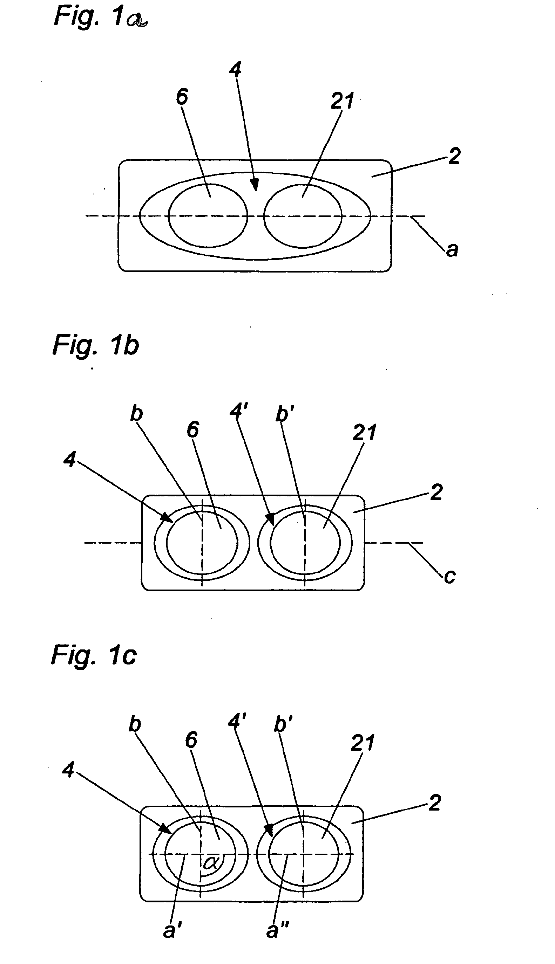

Bei der in Fig. 1a dargestellten Trägerplatte 2 sind die beiden Halteelemente 6, 21 um eine gemeinsame horizontale Drehachse a schwenkbar in der Durchtrittsöffnung 4 der Trägerplatte 2 angeordnet. Dieses Prinzip wird vor allem bei solchen Trägerplatten 2 zur Anwendung gelangen, die drehfest an einer Kopierfräseinrichtung 1 angeordnet sind.

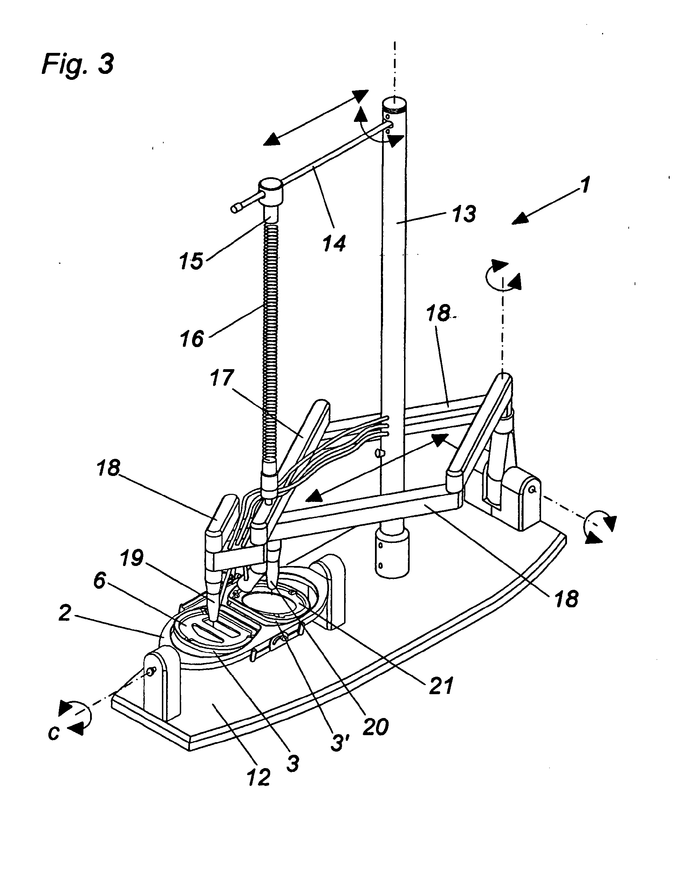

Ein weiteres Lagerungsprinzip der Halteelemente 6, 21 in einer Trägerplatte 2 ist in Fig. 1b dargestellt. Bei diesem Beispiel ist die Trägerplatte 2 um eine horizontale Achse c drehbar an einer Kopierfräseinrichtung angeordnet. Die beiden Halteelemente 6 und 21 sind in Durchtrittsöffnungen 4, 4' der Trägerplatte 2 um zwei parallele horizontale Drehachsen b, b' schwenkbar angeordnet, wobei die beiden Drehachsen b, b' der Halteelemente 6, 21 mit der Drehachse c der Trägerplatte 2 einen im Wesentlichen rechten Winkel einschließen. Durch diese Anordnung wird erreicht, dass der Formrohling und der Modellkörper (nicht dargestellt), die in den Halteelementen 6, 21 befestigt sind, in Bezug auf das Bearbeitungswerkzeug 19 und die Tastvorrichtung 20 (Fig. 3) in zwei Ebenen verschwenkbar sind.

Eine dritte Anordnungsmöglichkeit der Halteelemente 6, 21 in der erfindungsgemäßen Trägerplatte 2 ist in Fig. 1c dargestellt. Bei diesem Beispiel sind die beiden Halteelemente 6, 21 in den Durchtrittsöffnungen 4, 4' jeweils um zwei horizontale Drehachsen a', b, a", b', die miteinander einen Winkel α von 90° einschließen, schwenkbar gelagert. Auch dieses Ausführungsbeispiel stellt eine Schwenkbarkeit des Formrohlings und des Modellkörpers in Bezug auf das Bearbeitungswerkzeug und die Tastvorrichtung in zwei Ebenen sicher.

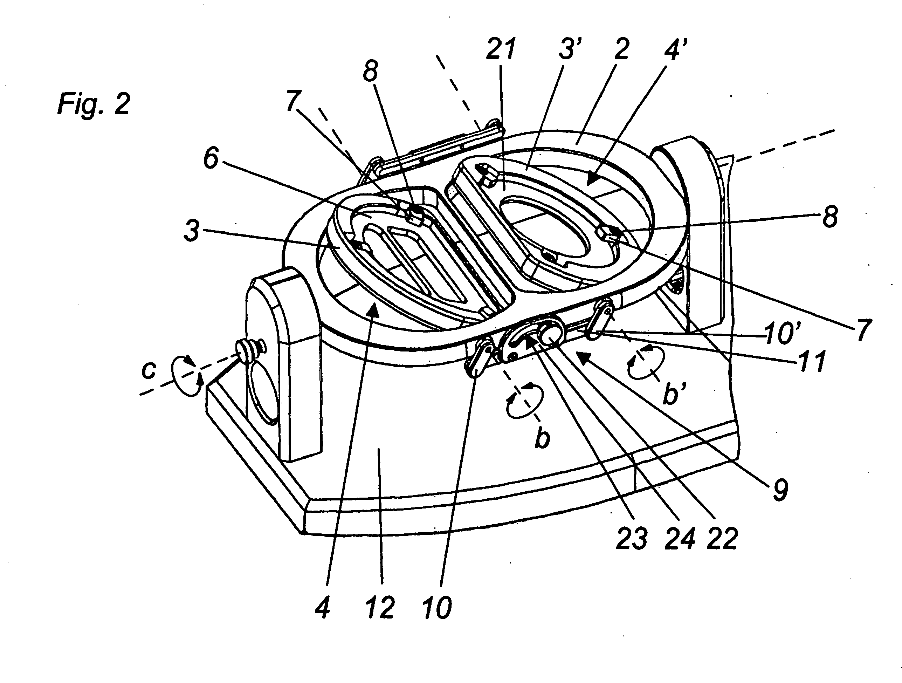

Bei dem in Fig. 2 dargestellten Ausführungsbeispiel ist die Trägerplatte 2 an der Basisplatte 12 einer Kopierfräseinrichtung 1 um eine horizontale Achse c drehbar gelagert. Die Trägerplatte 2 weist zwei Durchtrittsöffnungen 4, 4' auf, in denen jeweils eine Spannvorrichtung 3, 3' um eine horizontale Drehachse b, b' verschwenkbar gelagert ist.

Die Spannvorrichtungen 3, 3' sind über eine Hebelmechanik 9 mechanisch und synchron bewegbar gekoppelt. Die Hebelmechanik 9 weist dazu zwei um die Drehachsen b, b' der Spannvorrichtungen 3, 3' drehbare einarmige Hebel 10, 10' auf, die über eine Kuppelstange 11 starr miteinander verbunden sind. An der Kuppelstange 11 ist ein Führungselement 24 angeordnet. Im Führungselement 24 ist eine bogenförmige Führungsbahn 23 in Form einer Durchtrittsöffnung ausgebildet. Durch die Führungsbahn 23 hindurch tretend ist eine Feststellschraube 22 an der Trägerplatte 2 angeordnet. Zum Verschwenken der Spannvorrichtungen 3, 3' wird also die Feststellschraube 22 gelöst, die Kuppelstange 11 über die Führungsbahn 23 geführt nach rechts oder links verschwenkt und in weiterer Folge werden die Spannvorrichtungen 3, 3' in einer neue Lage durch Anziehen der Verstellschraube 22 positioniert.

Die Spannvorrichtungen 3, 3' sind beim gezeigten Ausführungsbeispiel ringförmig ausgebildet und sind der Form nach den Halteelementen 6, 21 im Wesentlichen angepasst. Zum Fixieren der Halteelemente 6, 21 in den Spannvorrichtungen 3, 3' weisen diese mehrere Klemmeinrichtungen auf. Beim gezeigten Ausführungsbeispiel werden diese Klemmeinrichtungen jeweils von einer Klemmbacke 7 und einer Schraube 8 gebildet. Zum Fixieren der Halteelemente 6, 21 in den Spannvorrichtungen 3, 3' werden also zuerst die Halteelemente 6, 21 in die Spannvorrichtungen 3, 3' eingelegt und danach mittels der Klemmbacken 7 durch Anziehen der Schrauben 8 festgeklemmt.

Wenn auch beim gezeigten Ausführungsbeispiel die Spannvorrichtungen 3, 3' ringförmig, die Halteelemente 6, 21 umschließend, ausgebildet sind, wäre es durchaus möglich, dass die Spannvorrichtungen 3, 3' von jeweils einer Klemmeinrichtung, die um eine horizontale Achse b, b' drehbar gelagert sind, gebildet werden. Unabhängig davon, wie die Spannvorrichtungen 3, 3' ausgebildet sind, besteht eine wesentliche Idee der Erfindung darin, die Halteelemente 6, 21 in den Durchtrittsöffnungen 4, 4' der Trägerplatte 2 um eine horizontale Achse a, a', a", b, b' drehbar, insbesondere synchron bewegbar, anzuordnen.

In Fig. 3 ist schematisch eine Kopierfräseinrichtung 1 dargestellt, wobei insbesondere die Trägerplatte 2 erkennbar ist. Auf einer Basisplatte 12 ist ein vertikaler Träger 13 angeordnet, an dem über eine Haltevorrichtung 14 ein Widerlager 15 für eine Feder 16 gelagert ist. Das Widerlager 15 ist an der Haltevorrichtung 14 in Längsrichtung der Haltevorrichtung 14 verschiebbar gelagert. Auf diese Weise wird sichergestellt, dass das Widerlager 15 der Feder 16 dem Angriffspunkt der Feder 16 im Ausleger 17 bei Lageänderung folgen kann, sodass die Feder 16 während des gesamten Fräsvorganges im Wesentlichen vertikal ausgerichtet ist. Über eine storchenschnabelartige Anordnung von miteinander drehwinkelig verbundenen Hebeln 18 sind ein motorisch angetriebenes Verarbeiturigswerkzeug 19 zum Fräsen des Formrohlings sowie eine Tastvorrichtung 20 zum Abtasten des Modellkörpers angeordnet.

Die dargestellten Ausführungsbeispiele von Trägerplatten für eine Kopierfräseinrichtung sind selbstverständlich nicht im einschränkenden Sinne zu verstehen, sondern nur einzelne Beispiele von zahlreichen Möglichkeiten, den Erfindungsgedanken einer Trägerplatte mit in den Durchtrittsöffnungen der Trägerplatte um eine horizontale Achse schwenkbar angeordneten Halteelementen zu realisieren, wie in den Ansprüchen definiert.

## Patentansprüche

1. Trägerplatte (2) für eine insbesondere manuell zu betätigende Kopierfräseinrichtung (1) mit wenigstens einer Durchtrittsöffnung (4) oder wenigstens zwei Durchtrittsöffnungen (4, 4'), und im Wesentlichen scheibenförmigen Halteelementen (6, 21), wobei für den Fall, dass wenigstens einen Durchtrittsöffnung (4) vorgesehen ist, ein Formkörper und ein Modellkörper jeweils mittels eines der scheibenförmigen Halteelemente (6) in der wenigstens einen Durchtrittsöffnung (4) anordenbar oder angeordnet sind und für den Fall, dass wenigstens zwei Durchtrittsöffnungen (4, 4') vorgesehen sind, ein Formkörper und ein Modellkörper jeweils mittels eines der scheibenförmigen Halteelemente (6, 21) in jeweils einer der wenigstens zwei Durchtrittsöffnungen (4, 4') anordenbar oder angeordnet sind, **dadurch gekennzeichnet, dass** die scheibenförmigen Halteelemente (6, 21) für den Formrohling und den Modellkörper in der wenigstens einen Durchtrittsöffnung (4) bzw. den wenigstens zwei Durchtrittsöffnungen (4, 4') wenigstens um eine im Wesentlichen horizontale Drehachse (a, a', a", b, b') schwenkbar angeordnet sind.

2. Trägerplatte nach Anspruch 1, **dadurch gekennzeichnet, dass** für den Fall, dass wenigstens zwei Durchttrittsöffnungen vorgesehen sind, die Halteelemente (6, 21) für den Formrohling und den Modellkörper jeweils um eine horizontale Drehachse (b, b') schwenkbar in der wenigstens einen Durchtrittsöffnung (4, 4') angeordnet sind, wobei die Drehachsen (b, b') der Halteelemente (6, 21) parallel verlaufen.

3. Trägerplatte nach der Anspruch 1 oder 2, **dadurch gekennzeichnet, dass** für den Fall, dass wenigstens zwei Durchttrittsöffnungen vorgesehen sind, die Halteelemente (6, 21) für den Formrohling und den Modellkörper jeweils um zwei horizontale Drehachsen (a', a", b, b'), die einen Winkel (α) von vorzugsweise 90° einschließen, schwenkbar in der wenigstens einen Durchtrittsöffnung (4, 4') angeordnet sind.

4. Trägerplatte nach einem der Ansprüche 1 bis 3, **dadurch gekennzeichnet**, für den Fall, dass wenigstens zwei Durchttrittsöffnungen vorgesehen sind, dass die Halteelemente (6, 21) für den Formrohling und den Modellkörper synchron verschwenkbar in der wenigstens einen Durchtrittsöffnung (4, 4') anordenbar bzw. angeordnet sind.

5. Trägerplatte nach einem der Ansprüche 1 bis 4, **gekennzeichnet durch** eine Feststelleinrichtung (5) zur lösbaren Lagepositionierung der Halteelemente (6, 21) in unterschiedlichen Stellungen.

6. Trägerplatte nach einem der Ansprüche 1 bis 5, **dadurch gekennzeichnet, dass** die schwenkbare Anordnung der Halteelemente (6, 21) in der/den Durchtrittsöffriung(en) (4, 4') mittels wenigstens einer Spannvorrichtung (3, 3') zum Fixieren der scheibenförmigen Halteelemente (6, 21) erfolgt, wobei die Spannvorrichtung (3, 3') wenigstens um eine im Wesentlichen horizontale Drehachse (b, b') an der Trägerplatte (2) gelagert ist(sind).

7. Trägerplatte nach Anspruch 6, **dadurch gekennzeichnet, dass** die Spannvorrichtung (3, 3') wenigstens eine Klemmeinrichtung zum Fixieren des Haltelementes (6, 21) aufweist.

8. Trägerplatte nach einem der Ansprüche 6 oder 7, **dadurch gekennzeichnet, dass** wenigstens eine Spannvorrichtung (3, 3') im Wesentlichen ringförmig, das Halteelement (6, 21) zumindest teilweise umschließend ausgebildet ist und die Fixierung des Halteelementes (6, 21) in der Spannvorrichtung (3, 3') mit wenigstens einer Klemmeinrichtung erfolgt.

9. Trägerplatte nach Anspruch 8, **dadurch gekennzeichnet, dass** die Klemmeinrichtung eine mittels einer Schraube (8) feststellbare Klemmbacke (7) aufweist.

10. Trägerplatte nach einem der Ansprüche 6 bis 9, **gekennzeichnet durch** wenigstens zwei wenigstens um eine im Wesentlichen horizontale Drehachse (b, b') gelagerte Spannvorrichtungen (3, 3') für scheibenförmige Halteelemente (6, 21), wobei die beiden Spannvorrichtungen (3, 3') mechanisch und synchron bewegbar verbunden sind.

11. Trägerplatte nach Anspruch 10, **dadurch gekennzeichnet, dass** die beiden Spannvorrichtungen (3, 3') jeweils um eine horizontale Drehachse (b, b') drehbar in der wenigstens eine Durchtrittsöffnung (4, 4') gelagert sind, wobei die Drehachsen (b, b') der Spannvorrichtungen (3, 3') parallel verlaufen.

12. Trägerplatte nach Anspruch 10 oder 11, **dadurch gekennzeichnet, dass** die beiden Spannvorrichtungen (3, 3') über eine Hebelmechanik (9) gekuppelt sind.

13. Trägerplatte nach Anspruch 12, **dadurch gekennzeichnet, dass** die Hebelmechanik (9) einen ersten, um die Drehachse (b) der ersten Spannvorrichtung (3) drehbaren Hebel (10) und einen zweiten, um die Drehachse (b') der zweiten Spannvorrichtung (3') drehbaren Hebel (10') aufweist und die beiden vorzugsweise einarmigen Hebel (10, 10') mittels eine Kuppelstange (11) vorzugsweise starr verbunden sind.

14. Trägerplatte nach Anspruch 13 **dadurch gekennzeichnet, dass** die Feststellvorrichtung (5) zur lösbaren Lagepositionierung der Kuppelstange (11) in unterschiedlichen Stellungen angeordnet und ausgebildet ist.

15. Trägerplatte nach Anspruch 14, **dadurch gekennzeichnet, dass** die Feststellvorrichtung (5) eine Feststellschraube (22) aufweist, die durch eine an der Kuppelstange (11) ausgebildete bzw. angeordnete Führungsbahn (23) durchtritt und an der Trägerplatte (2) angeordnet ist.

16. Kopierfräseinrichtung (1) **gekennzeichnet durch** eine Trägerplatte (2) nach einem der Ansprüche 1 bis 15.

17. Kopierfräseinrichtung (1) nach Anspruch 16, **dadurch gekennzeichnet, dass** die Trägerplatte (2) um eine im Wesentlichen horizontale Achse (c) drehbar, vorzugsweise über einen Winkel von 360°, an der Kopierfräseinrichtung (1) angeordnet ist.

## Claims

1. A support plate (2) for an, in particular manually actuatable, duplicating milling apparatus (1) with at least one through-opening (4) or at least two through-openings (4, 4') and substantially disk-shaped retaining elements (6, 21), wherein, for the case that at least one through-opening (4) is provided, a shaped blank and a solid model each are or can be arranged in the at least one through-opening (4) by means of one of the disk-shaped retaining elements (6) and, for the case that at least two through-openings (4, 4') are provided, a shaped blank and a solid model each are or can be arranged in one of the at least two through-openings (4, 4') each by means of one of the disk-shaped retaining elements (6, 21), **characterized in that** the disk-shaped retaining elements (6, 21) for the shaped blank and the solid model are arranged in the at least one through-opening (4) or, respectively, in the at least two through-openings (4, 4') so as to be pivotable at least about a substantially horizontal axis of rotation (a, a', a", b, b').

2. The support plate as claimed in claim 1, **characterized in that**, for the case that at least two through-openings are provided, the elements (6, 21) for retaining the shaped blank and the solid model each are arranged in the at least one through-opening (4, 4') so as to be pivotable about a horizontal axis of rotation (b, b'), the axes of rotation (b, b') of the retaining elements (6, 21) extending in parallel.

3. The support plate as claimed in claim 1 or 2, **characterized in that**, for the case that at least two through-openings are provided, the elements (6, 21) for retaining the shaped blank and the solid model each are or can be arranged in the at least one through-opening (4, 4') so as to be pivotable about two horizontal axes of rotation (a', a", b, b') enclosing an angle (α) of preferably 90°.

4. The support plate as claimed in one of claims 1 to 3, **characterized in that**, for the case that at least two through-openings are provided, the elements (6, 21) for retaining the shaped blank and the solid model are or can be arranged in the at least one through-opening (4, 4') so as to be pivotable in synchronization.

5. The support plate as claimed in one of claims 1 to 4, **characterized by** a securing apparatus (5) for releasably positioning the retaining elements (6, 21) in different positions.

6. The support plate as claimed in one of claims 1 to 5, **characterized in that** the retaining elements (6, 21) are pivotably arranged in the through-opening(s) (4, 4') by means of at least one tensioning device (3, 3') for fixing the disk-shaped retaining elements (6, 21), the tensioning device(s) (3, 3') being mounted on the support plate (2) at least about a substantially horizontal axis of rotation (b, b')

7. The support plate as claimed in claim 6, **characterized in that** the tensioning device (3, 3') has at least one clamping apparatus for fixing the retaining element (6, 21).

8. The support plate as claimed in one of claims 6 or 7, **characterized in that** at least one tensioning device (3, 3') is substantially annular in its embodiment, at least partially surrounding the retaining element (6, 21), and the retaining element (6, 21) is fixed in the tensioning device (3, 3') using at least one clamping apparatus.

9. The support plate as claimed in claim 8, **characterized in that** the clamping apparatus has a clamping jaw (7) which can be secured by means of a screw (8).

10. The support plate as claimed in one of claims 6 to 9, **characterized by** at least two devices (3, 3'), which are mounted at least about a substantially horizontal axis of rotation (b, b'), for tensioning disk-shaped retaining elements (6, 21), the two tensioning devices (3, 3') being mechanically connected so as to be movable in synchronization.

11. The support plate as claimed in claim 10, **characterized in that** the two tensioning devices (3, 3') are each mounted in the at least one through-opening (4, 4') so as to be rotatable about a horizontal axis of rotation (b, b'), the axes of rotation (b, b') of the tensioning devices (3, 3') extending in parallel.

12. The support plate as claimed in claim 10 or 11, **characterized in that** the two tensioning devices (3, 3') are coupled via a lever mechanism (9).

13. The support plate as claimed in claim 12, **characterized in that** the lever mechanism (9) has a first lever (10), which is rotatable about the axis of rotation (b) of the first tensioning device (3), and a second lever (10'), which is rotatable about the axis of rotation (b') of the second tensioning device (3'), and the two, preferably one-armed, levers (10, 10') are preferably rigidly connected by means of a coupling rod (11).

14. The support plate as claimed in claim 13, **characterized in that** the securing device (5) is arranged and embodied for releasably positioning the coupling rod (11) in different positions.

15. The support plate as claimed in claim 14, **characterized in that** the securing device (5) has a securing screw (22) which passes through a guideway (23), which is embodied or arranged on the coupling rod (11), and is arranged on the support plate (2).

16. A duplicating milling apparatus (1), **characterized by** a support plate (2) as claimed in one of claims 1 to 15.

17. The duplicating milling apparatus (1) as claimed in claim 16, **characterized in that** the support plate (2) is arranged on the duplicating milling apparatus (1) so as to be rotatable about a substantially horizontal axis (c), preferably over an angle of 360°.

## Revendications

1. Plaque de support (2) pour un dispositif de fraisage par copiage (1) à activer en particulier manuellement avec au moins une ouverture de passage (4) ou au moins deux ouvertures de passage (4, 4'), et des éléments de retenue essentiellement en forme de disque (6, 21), dans laquelle pour le cas où au moins une ouverture de passage (4) est prévue, un corps à façonner et un corps modèle peuvent être disposés ou sont disposés chacun à l'aide d'un des éléments de retenue en forme de disque (6) dans l'au moins une ouverture de passage (4), et pour le cas où au moins deux ouvertures de passage (4, 4') sont prévues, un corps à façonner et un corps modèle peuvent être disposés ou sont disposés chacun à l'aide d'un des éléments de retenue en forme de disque (6, 21) chacun dans une des au moins deux ouvertures de passage (4, 4'), **caractérisée en ce que** les éléments de retenue en forme de disque (6, 21) pour l'ébauche à façonner et le corps modèle sont disposés dans l'au moins une ouverture de passage (4) ou bien les au moins deux ouvertures de passage (4, 4') de façon pivotante au moins autour d'un axe de rotation essentiellement horizontal (a, a', b, b').

2. Plaque de support selon la revendication 1, **caractérisée en ce que** pour le cas où au moins deux ouvertures de passage sont prévues, les éléments de retenue (6, 21) pour l'ébauche à façonner et le corps modèle sont disposés chacun autour d'un axe de rotation horizontal (b, b') de façon pivotante dans l'au moins une ouverture de passage (4, 4'), les axes de rotation (b, b') des éléments de retenue (6, 21) passant parallèlement.

3. Plaque de support selon la revendication 1 ou 2, **caractérisée en ce que** pour le cas où au moins deux ouvertures de passage sont prévues, les éléments de retenue (6, 21) pour l'ébauche à façonner et le corps modèle peuvent être disposés ou sont disposés chacun autour de deux axes de rotation horizontaux (a', a", b, b'), qui forment un angle (a) de 90° de préférence, de façon pivotante dans l'au moins une ouverture de passage (4, 4').

4. Plaque de support selon l'une des revendications 1 à 3, **caractérisée en ce que** pour le cas où au moins deux ouvertures de passage sont prévues, les éléments de retenue (6, 21) pour l'ébauche à façonner et le corps modèle peuvent être disposés ou sont disposés en pouvant pivotant de façon synchrone dans l'au moins une ouverture de passage (4, 4').

5. Plaque de support selon l'une des revendications 1 à 4, **caractérisée par** un dispositif de blocage (5) destiné au positionnement mobile de l'emplacement des éléments de retenue (6, 21) en différents endroits.

6. Plaque de support selon l'une des revendications 1 à 5, **caractérisée en ce que** la disposition pivotante des éléments de retenue (6, 21) se fait dans la/les ouverture(s) de passage (4, 4') à l'aide d'au moins un dispositif de réglage de tension (3,3') pour fixer les éléments de retenue en forme de disque (6, 21), le le dispositif de réglage de tension (3, 3') étant logé au moins autour d'un axe de rotation (b, b') essentiellement horizontal sur la plaque de support (2).

7. Plaque de support selon la revendication 6, **caractérisée en ce que** le dispositif de réglage de tension (3, 3') présente au moins un dispositif de serrage pour fixer l'élément de retenue (6, 21).

8. Plaque de support selon l'une des revendications 6 ou 7, **caractérisée en ce que** au moins un dispositif de réglage de tension (3, 3') essentiellement en forme d'anneau est conçu en entourant au moins partiellement l'élément de retenue (6, 21) et la fixation de l'élément de retenue (6, 21) dans le dispositif de réglage de tension (3, 3') se fait avec au moins un dispositif de serrage.

9. Plaque de support selon la revendication 8, **caractérisée en ce que** le dispositif de serrage présente un dispositif de serrage (7) pouvant être fixé à l'aide d'une vis (8).

10. Plaque de support selon l'une des revendications 6 à 9, **caractérisé par** au moins deux dispositifs de réglage de tension (3, 3'), logés au moins autour d'un axe de rotation essentiellement horizontal (b, b'), pour des éléments de retenue en forme de disque (6, 21), dans laquelle les deux dispositifs de réglage de tension (3, 3') sont reliés mécaniquement et en étant mobiles de façon synchrone.

11. Plaque de support selon la revendication 10, **caractérisée en ce que** les deux dispositifs de réglage de tension (3, 3') sont logés chacun autour d'un axe de rotation horizontal (b, b') de façon rotative dans l'au moins une ouverture de passage (4, 4'), les axes de rotation (b, b') des dispositifs de réglage de tension (3, 3') s'étendant parallèlement.

12. Plaque de support selon la revendication 10 ou 11, **caractérisée en ce que** les deux dispositifs de réglage de tension (3, 3') sont couplés au moyen d'un mécanisme à levier (9).

13. Plaque de support selon la revendication 12, **caractérisée en ce que** le mécanisme à levier (9) présente un premier levier (10) rotatif autour de l'axe de rotation (b) du premier dispositif de réglage de tension (3) et un deuxième levier (10') rotatif autour de l'axe de rotation (b') du deuxième dispositif de réglage de tension (3') et les deux leviers (10, 10') de préférence à bras unique sont reliés de préférence de façon rigide à l'aide d'une tige d'accouplement (11).

14. Plaque de support selon la revendication 13, **caractérisée en ce que** le dispositif de blocage (5) pour un positionnement mobile de la tige d'accouplement (11) est disposé et conçu dans différents endroits.

15. Plaque de support selon la revendication 14, **caractérisée en ce que** le dispositif de blocage (5) présente une vis de blocage (22) qui passe à travers une glissière de guidage (23) formée ou disposée sur la tige d'accouplement (11) et est disposée sur la plaque de support (2).

16. Dispositif de fraisage par copiage (1), **caractérisé par** une plaque de support (2) selon l'une des revendications 1 à 15.

17. Dispositif de fraisage par copiage (1) selon la revendication 16, **caractérisé en ce que** la plaque de support (2), rotative autour d'un axe essentiellement horizontal (c), est disposée sur le dispositif de fraisage par copiage (1 de préférence à un angle de 360°.
